# EUROPEAN PATENT APPLICATION

(11) **EP 1 662 682 A2**
(43) Date of publication of application: **31.05.2006**
(21) Application number: 05256489.5
(22) Date of filing: 19.10.2005
(51) Int. Cl.: H04H 1/00, H04H 9/00

(54) **Method and apparatus for broadcasting contents based on user's preferences and method and apparatus for receiving said contents**

(30) Priority: 26.11.2004 KR 2004097997
(71) Applicant: Samsung Electronics Co., Ltd., Suwon-si, Gyeonggi-Do (KR)
(72) Inventor: Park, Ju-hee, Yeongtong-gu,Suwon-si,Gyeonggi-do (KR)
(74) Representative: Davies, Robert Ean

(57) **Abstract**

A method and device to transmit data broadcasting contents and a method and device to receive data broadcasting contents allowing data broadcasting contents reflecting a preference of a user to be transmitted. The method of transmitting data broadcasting contents includes: receiving (820) content preference information indicating a preference for a transmitted data broadcasting content from a user terminal through a back channel; determining (830) priorities of broadcasting contents to be transmitted based on the content preference information; and transmitting (850) data broadcasting contents based on the determined priorities. Accordingly, the receivers actively transmit (930) a request reflecting preferences to a data broadcasting transmitting device, and therefore, appropriate and early receipt of information can be expected.

## Description

The present invention relates to a data service in digital broadcasting, and more particularly, but not exclusively, to a method and apparatus to transmit broadcasting contents and a method and apparatus to receive broadcasting contents, in which a preference of a user is reflected in data broadcasting and data broadcasting contents.

Recently, integrated transport networks have been a common means over which files are transmitted. Media transmission service using packets is provided through a broadcasting network or an Internet network.

A file transport protocol in a broadcasting network, for example, a Multimedia Object Transfer (MOT) protocol in Digital Audio Broadcasting (DAB), is a transport protocol for the transmission of multimedia objects, such as text, still images, motion pictures, audio sequences, etc., in data channels of very high frequency (VHF) digital radio broadcasting, and includes rules related to the basic representation and operation of the objects.

A directory format of an MOT protocol provides a management mechanism for broadcasting MOT objects in a data carousel. A data carousel is a delivery system that allows an application server to present a set of distinct objects to an application decoder by cyclically repeating the contents of the carousel. Within a data carousel, a directory is used to provide a description of the contents of the carousel.

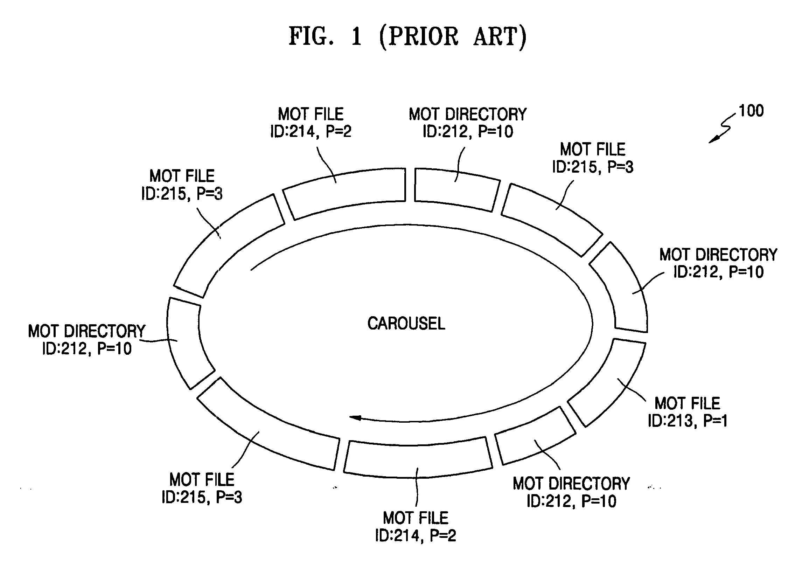

FIG. 1 is a diagram illustrating a mechanism of broadcasting MOT objects in a data carousel according to the prior art.

FIG. 1 also illustrates a data service configuration. Contents of a data service are formed of several data objects and an information data object including information of the data objects. A Broadcast Web Site (BWS) data structure of a DAB data service is shown as an example in FIG. 1.

In an MOT protocol, the data object is referred to as an MOT file and an information data object of data included in the MOT file is referred to as an MOT directory.

Referring to FIG. 1, each MOT directory and MOT file forwarded from a carousel 100 includes an ID (identification) and a priority P. The numerical value of the priority P is directly proportional to a data priority. In a repeat transport method as illustrated in FIG. 1, the carousel generally determines how many times the transport is repeated until the expiration of the data object based on priorities. That is, the number of times that the transport is repeated is directly proportional to the numerical value of the priority. Referring to FIG. 1, an MOT directory (ID:212, P=10) having the highest priority of 10 is transmitted repeatedly, for example, four times. On the other hand, an MOT directory (ID:213, P=1) having the lowest priority of 1 is transmitted just once.

However, the priority is arbitrarily decided by the broadcasting station, and once the priority is decided, it is not changed. Therefore, the priority may not correspond to the priority of information a plurality of receivers desire to receive, and thus, a preference for data broadcasting is usually not obtained. As described above, in the conventional method, the priorities of data broadcasting contents are arbitrarily decided by the broadcasting station and, according to the priorities, the data broadcasting contents are transmitted. However, a user's preference cannot be reflected by this broadcasting method. Although the data broadcasting is based on real-time receipt, the receipt time and timing are less important than in video and audio broadcasting, and therefore, it is more effective to reflect the preference of the user in the data broadcasting contents which will be transmitted.

The present invention provides a method and device to transmit data broadcasting contents, and a method and device to receive the data broadcasting contents, in which the data broadcasting contents reflect the priorities of a user, and are transmitted in this way.

Additional aspects and advantages of the present invention will be set forth in part in the description which follows and, in part, will be obvious from the description, or may be learned by practice of the invention.

According to an aspect of the present invention, there is provided a method of transmitting data broadcasting contents, the method including: receiving content preference information indicating a preference for a transmitted data broadcasting content from a user terminal through a back channel; determining priorities of broadcasting contents to be transmitted based on the content preference information; and transmitting data broadcasting contents based on the determined priorities.

The method may further include transmitting to the user terminal a content table containing information on the transmitted data broadcasting contents such that preferred content can be selected.

The operation of determining the priorities may include statistically processing the received content preference information and giving a higher priority to a broadcasting content which is selected as a preferred content by a plurality of users.

According to an aspect of the present invention, there is provided a method of receiving data broadcasting contents, the method including: transmitting content preference information indicating a preference for a transmitted data broadcasting content to a data broadcasting content transmitting device through a back channel; and receiving the data broadcasting contents according to priorities of broadcasting contents which are determined based on the content preference information.

The method may further include: receiving a content table containing information on the transmitted data broadcasting contents from the data broadcasting content transmitting device such that preferred content can be selected; and selecting a preferred data broadcasting content from the content table.

According to an aspect of the present invention, there is provided a device to transmit data broadcasting contents, the device including: a content priority determination device to receive content preference information indicating a preference for a transmitted data broadcasting content from a user terminal through a back channel and to determine priorities of contents to be transmitted based on the content preference information; and a broadcast web server to transmit data broadcasting contents based on the determined priorities.

The broadcast web server may further transmit a content table containing information on the transmitted data broadcasting contents to the user terminal such that preferred content can be selected.

The content priority determination device may statistically process the received content preference information and give a higher priority to a broadcasting content which is selected as a preferred content by a plurality of users.

According to an aspect of the present invention, there is provided a device to receive data broadcasting contents, the device including: a content preference information managing unit to generate content preference information indicating a preference for a transmitted data broadcasting content and to transmit the content preference information to a data broadcasting content transmitting device through a back channel; and a content reproducing unit to receive and reproduce the data broadcasting data contents according to priorities of broadcasting contents which are determined based on the content preference information.

The content reproducing unit may further receive and reproduce a content table containing information on the transmitted data broadcasting contents from the data broadcasting content transmitting device such that preferred content can be selected, and the content preference information managing unit may generate the content preference information by receiving a user input selecting a preferred data broadcasting content from the reproduced content table.

According to an aspect of the present invention, there is provided a data broadcaster, comprising: a content priority determination device operable to process received content preference information regarding a preference for transmitted data broadcast content from a control device and to determine priorities of contents to be transmitted base on the content preference information; and a broadcast web server to transmit data broadcasting contents based on the determined priorities.

According to an aspect of the present invention, there is provided a computer readable storage medium containing code to perform a method of transmitting data broadcasting contents, the method comprising: receiving content preference information indicating a preference for a transmitted data broadcasting content from a user terminal through a back channel; determining priorities of broadcasting contents to be transmitted based on the content preference information; and transmitting data broadcasting contents based on the determined priorities. According to an aspect of the present invention, there is provided a computer readable storage medium containing code to perform a method of receiving data broadcasting contents, the method comprising: transmitting content preference information indicating a preference for a transmitted data broadcasting content to a data broadcasting content transmitting device through a back channel; and receiving the data broadcasting contents according to priorities of broadcasting contents which are determined based on the content preference information.

For a better understanding of the invention, and to show how embodiments of the same may be carried into effect, reference will now be made, by way of example, to the accompanying diagrammatic drawings in which:
FIG. 1 is a diagram illustrating a mechanism of broadcasting MOT objects in a data carousel according to the prior art;
FIG. 2 is a schematic block diagram of a data broadcasting system according to an embodiment of the present invention;
FIG. 3 is a block diagram of a broadcast web server according to an embodiment of the present invention;
FIG. 4 is a block diagram of a content priority determination device according to an embodiment of the present invention;
FIG. 5 is a block diagram of a receiver according to an embodiment of the present invention;
FIG. 6 is a diagram of an example of a content table according to an embodiment of the present invention;
FIG. 7 is a diagram of an example of content preference information according to an embodiment of the present invention;
FIG. 8 is a flowchart illustrating a method of transmitting broadcasting contents according to an embodiment of the present invention; and
FIG. 9 is a flowchart illustrating a method of selecting a preferred content in a receiver according to an embodiment of the present invention.

Reference will now be made in detail to the embodiments of the present invention, examples of which are illustrated in the accompanying drawings, wherein like reference numerals refer to the like elements throughout. The embodiments are described below in order to explain the present invention while referring to the figures.

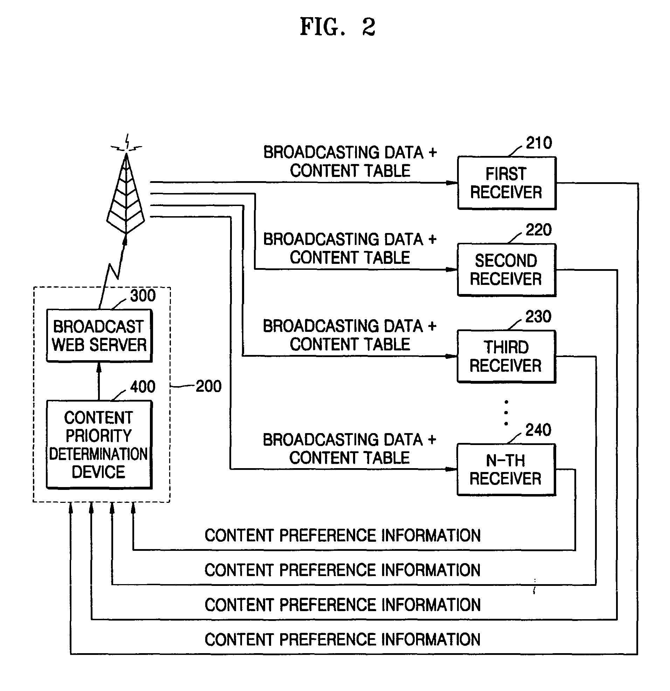

FIG. 2 is a schematic block diagram of a data broadcasting system according to an embodiment of the present invention.

In the data broadcasting system of FIG. 2, the receipt and transmission of data broadcasting and repeated transport via a back channel are performed through a Multimedia Object Transfer (MOT) Broadcast Web Site (BWS).

In an MOT BWS application, a variety of contents are formed of separate pages and identified by content IDs (identifications). Information about the contents and content ID may be previously agreed to between a receiver and a broadcasting station. Also, before a data service is started, the information is obtained by transmittance and receipt terminals.

Referring to FIG. 2, the data broadcasting device 200 conducts data broadcasting by transmitting data broadcasting contents to a first receiver 210 through an Nth receiver 240. Further, according to the embodiment of FIG. 2, the data broadcasting device 200 transmits a content table indicating a list of information on transmitted data broadcasting contents to the receivers 210 through 240.

The first receiver 210 through the Nth receiver 240 receive the data broadcasting contents from the data broadcasting device 200 and then play these contents. When the receivers receive the content table, a user can select a preferred content from the list in the receiver and transmit information about the content preference to the data broadcasting device 200 through a back channel. A transmission cycle and the number of content IDs that can be transmitted at the same time may be limited in the content preference information transmission. Alternatively, an automatic selection of preferred content can also be performed by an automatic selection device.

The data broadcasting device 200 includes a content priority determination device 400 and a broadcast web server 300, which together process the content preference information received through the back channel, adjusts priorities of contents to be transmitted, and transmits the data broadcasting contents according to the adjusted priorities.

The content priority determination device 400 performs a statistical procedure on the received content preference information and adjusts the previously set priorities of contents by raising the priorities of contents that many users select and reducing the priorities of contents with lower preferences.

The broadcast web server 300 determines how many times data is repeated based on the adjusted priorities and broadcasts the contents. The structure of the data broadcasting device illustrated in FIG. 2 is only an example, and alternative structures may be provided, such as the content priority determination device 400 being included in the broadcast web server 300 as one unit. The content priority determination device 400 receives the content preference information from the receiver using a back channel, such as the Internet, but not limited thereto, and any channel available for real-time transmission can be used to receive the content preference information.

Accordingly, the receiver can receive the data for which users have a higher preference sooner and more accurately, and thus, many users can be satisfied with the contents. In addition, since a user can actively select broadcasting contents through the back channel, interactive broadcasting may be expected in which users can participate and create the contents.

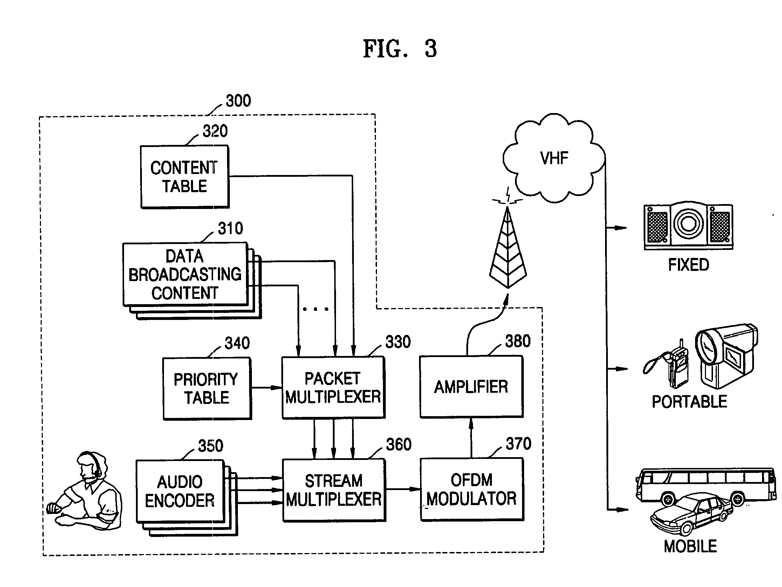

FIG. 3 is a schematic block diagram of the broadcast web server 300 of FIG. 2 according to an embodiment of the present invention.

Referring to FIG. 3, audio data to be broadcast is input to an audio encoder 350 and encoded. Then, the data undergoes channel coding, and is input to a stream multiplexer 360. In a DAB system, since a plurality of audio services can be provided, a plurality of audio encoders can be used.

A content table 320 indicating information on the data broadcasting contents 310, such as character information, web information, etc., excluding the audio information, and a list of the data broadcasting contents 310 is input to a packet multiplexer 330 and multiplexed. Then, the content table 320 undergoes channel coding, and is input to the stream multiplexer 360. Since a plurality of data services can also be provided, a plurality of packet multiplexers can exist. The packet multiplexer 330 decides how many times the data broadcasting contents are transmitted with reference to the priorities of contents contained in a priority table 340 and multiplexes the contents according to the determined number of times. That is, the packet multiplexer 330 multiplexes content having a higher priority of being transmitted more frequently in a predetermined period of time and a content having a lower priority of being transmitted less frequently in a predetermined period of time. According to the embodiment of FIG. 3, the priorities of contents contained in the priority table 340 are not fixed, but can be dynamically changed according to a preference of a user.

The stream multiplexer 360 multiplexes the audio service and data service, then, adds additional information and multiplex information about each service, attaches synchronization information to the services to make a DAB transmission frame, and finally outputs the frame.

The DAB transmission frame passes through an OFDM (orthogonal frequency division multiplexing) modulator 370 and an amplifier 380, and is transmitted over a VHF band radio wave. A receiving device may be fixed, portable, or mobile.

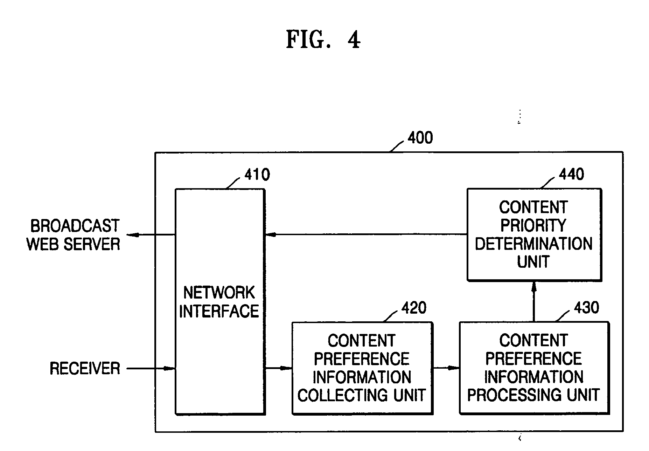

FIG. 4 is a schematic block diagram of the content priority determination device 400 of FIG. 2 according to an embodiment of the present invention.

The content priority determination device 400 according to the embodiment of FIG. 4 receives content preference information from a receiver through a back channel, and provides priority information determined by processing the received content preference information to a broadcast web server.

Referring to FIG. 4, a content preference information collecting unit 420 collects the content preference information through a network interface 410, stores it, and provides it to a content information processing unit 430.

The content information processing unit 430 processes the received content preference information using a statistical processing method or another type of processing method, and provides the processing result such as a preference for each content to a content priority determination unit 440.

The content priority determination unit 440 determines priorities of contents using the received result, and transmits the determined priorities to a broadcast web server through a network interface 410. FIG. 4 illustrates the content priority information to be transmitted to the broadcast web server through the network interface 410, but if the content priority determination device is included in the broadcast web server, the content priority information is directly transmitted without using the network interface.

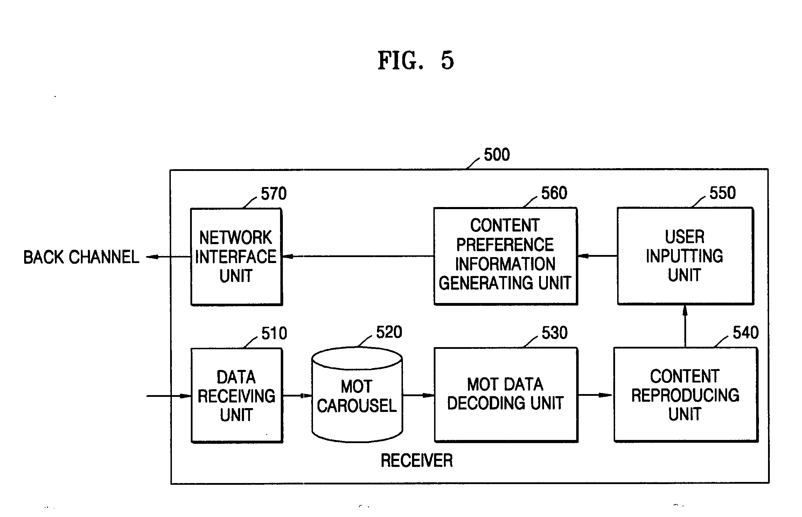

FIG. 5 is a schematic block diagram of a receiver 500 according to an embodiment of the present invention.

Referring to FIG. 5, a receiver 500 includes a data receiving unit 510, an MOT carousel 520, an MOT data decoding unit 530, a content reproducing unit 540, a user inputting unit 550, a content preference information generating unit 560, and a network interface unit 570.

The data receiving unit 510 receives data broadcasting contents and a content table sent from a data broadcasting device through a broadcast network.

The MOT carousel 520 reassembles the received data broadcasting contents and content table and stores data formed of an MOT object and an MOT file directory.

The MOT data decoding unit 530 decodes the MOT object and MOT file directory stored in the MOT carousel 520 and provides the decoded data to the content reproducing unit 540. The content reproducing unit 540 reproduces the decoded data.

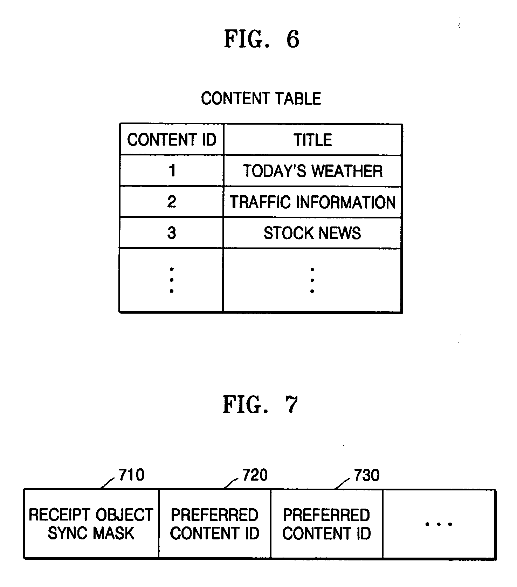

According to the embodiment of FIG. 5, the data reproduced by the content reproducing unit 540 includes a content table indicating a list of information on the contents as well as the data broadcasting contents. FIG. 6 illustrates an example of a content table according to an embodiment of the present invention.

Referring to FIG. 6, the content table contains a content ID of the transmitted content and a title thereof. The content ID includes identifying information to recognize the content. The title is information that briefly indicates what the content is, and it can be a title or the like, or a representative image of the content.

A user can select preferred content from the content table illustrated in FIG. 6 through the user inputting unit 550. Information about the selected content is transmitted to the content preference information generating unit 560. The content preference information generating unit 560 receives the content preference information through the user inputting unit 550, and generates content preference information of the user. The user may select one or more preferred content. FIG. 7 illustrates an example of the content preference information according to the present invention.

Referring to FIG. 7, information 700 of a preferred content contains a receipt object sync mask 710 and a first preferred content ID 720 and a second preferred content ID 730.

The sync mask 710 indicates an identifier to identify information of a preferred content, and the first and second preferred content IDs 720 and 730 indicate IDs of preferred contents which the user selects. Since one or more preferred content can be selected, one or more preferred content ID can be contained in the information of a preferred content.

The content preference information generated as described above is transmitted to the data broadcasting device using a back channel through the network interface unit 570.

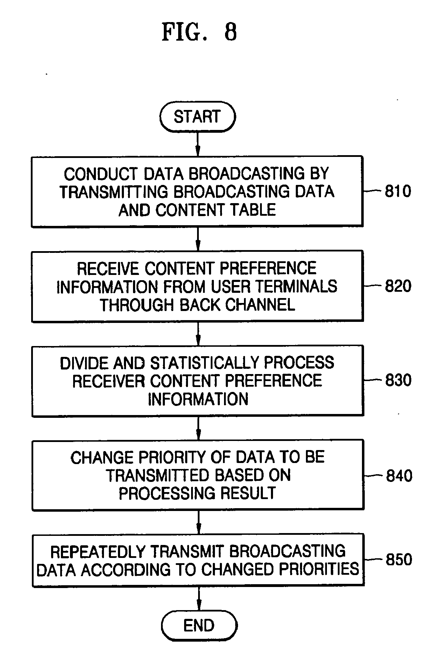

FIG. 8 is a flowchart illustrating a method of transmitting broadcasting data according to an embodiment of the present invention.

A data broadcasting content transmitting device conducts data broadcasting by transmitting broadcasting data and a content table (operation 810).

Then, the data broadcasting content transmitting device receives content preference information from user terminals through a back channel (operation 820).

The data broadcasting content transmitting device classifies and statistically processes the received content preference information (operation 830), and changes priorities of data to be transmitted based on the processing result (operation 840).

The data broadcasting content transmitting device repeatedly transmits the broadcasting data according to the changed priorities (operation 850).

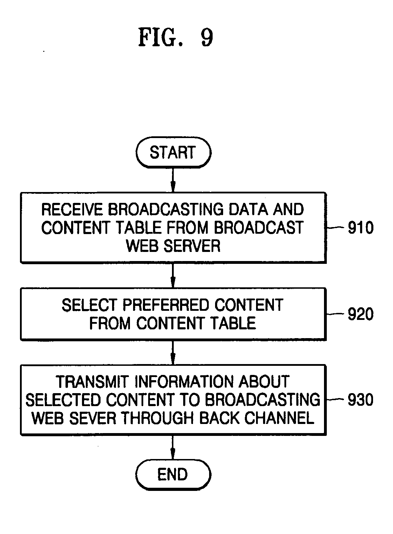

FIG. 9 is a flowchart illustrating a method of selecting a preferred content in a receiver according to an embodiment of the present invention.

Referring to FIG. 9, a data broadcasting content receiver receives broadcasting data and a content table from a broadcast web server (operation 910).

There are no limits to the type of content table and broadcasting data, i.e., data broadcasting content, and a user selects a preferred content from the content table displayed on a display unit of the receiver (operation 920).

Then, the receiver generates information about the selected content and transmits the information to the broadcast web server through a back channel (operation 930).

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, codes, and code segments for accomplishing the present invention can be easily construed by programmers skilled in the art to which the present invention pertains.

According to embodiments of the present invention, while the transmission is conducted according to arbitrary priorities in conventional data object transmission, receivers actively transmit a request reflecting users' preferences to a data broadcasting transmitting device, and therefore, appropriate and early receipt of information can be expected. In particular, contents such as news that many users desire to receive at a specific time can be quickly and stably transmitted. Further, since a receipt terminal tends to be commercialised as a multifunction device with functionality of a mobile phone and a PDA (personal digital assistant), the utilization of a back channel is increased.

Although a few embodiments of the present invention have been shown and described, it will be appreciated by those skilled in the art that changes may be made in these embodiments without departing from the principles and spirit of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of transmitting data broadcasting contents, the method comprising:
receiving (820) content preference information indicating a preference for transmitted data broadcasting content from a user terminal through a back channel;
determining (830) priorities of broadcasting contents to be transmitted based on the content preference information; and
transmitting (850) data broadcasting contents based on the determined priorities.

2. The method of claim 1, further comprising:
transmitting to the user terminal a content table (320) containing information on the transmitted data broadcasting contents such that preferred content can be selected.

3. The method of claim 2, wherein the preferred content is selected by a user.

4. The method of any preceding claim, wherein the operation of determining (830) the priorities includes the operation of statistically processing the received content preference information and giving a higher priority to a broadcasting content which is selected as a preferred content by a plurality of users.

5. A method of receiving data broadcasting contents, the method comprising:
transmitting (930) content preference information indicating a preference for a transmitted data broadcasting content to a data broadcasting content transmitting device through a back channel; and
receiving (910) the data broadcasting contents according to priorities of broadcasting contents which are determined based on the content preference information.

6. The method of claim 5, further comprising:
receiving a content table (320) containing information on the transmitted data broadcasting contents from the data broadcasting content transmitting device such that preferred content can be selected; and
selecting (920) a preferred data broadcasting content from the content table.

7. A device (200) operable to transmit data broadcasting contents, the device comprising:
a content priority determination device (400) operable to receive content preference information indicating a preference for transmitted data broadcasting content from a user terminal through a back channel and to determine priorities of contents to be transmitted based on the content preference information; and
a broadcast web server (300) operable to transmit data broadcasting contents based on the determined priorities.

8. The device of claim 7, wherein the broadcast web server (300) is further operable to transmit a content table (320) containing the transmitted data broadcasting contents to the user terminal such that preferred content can be selected.

9. The device of claim 7 or 8, wherein the content priority determination device (400) is operable to statistically process the received content preference information and to give a higher priority to a broadcasting content which is selected as a preferred content by a plurality of users.

10. The device of claim 8 or 9, wherein the preferred content is selected by a user.

11. The device of any of claims 7-10, wherein the broadcast web server (300) comprises:
an audio encoder (350) operable to receive and channel code data to be broadcasted;
a content table (320) indicating information on the data broadcasting contents;
a packet multiplexer (330) operable to determine how many times the data broadcasting contents are transmitted with reference to the priorities of the contents in the priority table and to multiplex the data broadcasting contents based on the determined number of times;
a stream multiplexer (360) operable to multiplex the channel coded data, to add additional information and multiplex information about the broadcast data, to attach synchronization information to the broadcast data to make a digital audio broadcasting (DAB) transmission frame, and to output the frame.

12. The device of claim 11, further comprising:
an orthogonal frequency division multiplexing (OFDM) modulator (370) operable to receive the DAB transmission frame and multiplex the frame; and
an amplifier (380) operable to amplify the multiplexed DAB transmission frame.

13. A device (500) operable to receive data broadcasting contents, the device comprising:
a content preference information generating unit (560) operable to generate content preference information indicating a preference for transmitted data broadcasting content and to transmit the content preference information to a data broadcasting content transmitting device through a back channel; and
a content reproducing unit (540) operable to receive and reproduce the data broadcasting data contents according to priorities of broadcasting contents which are determined based on the content preference information.

14. The device of claim 13, wherein
the content reproducing unit (540) is further operable to receive and reproduce a content table (320) containing the transmitted data broadcasting contents from the data broadcasting content transmitting device (300) such that preferred content can be selected, and
the content preference information generating unit (560) is operable to generate the content preference information by receiving a user input selecting a preferred data broadcasting content from the reproduced content table.
15. A method of transmitting data broadcasting contents, the method comprising:
receiving (820) information to adjust broadcasting content data from a user terminal through a back channel;
adjusting (840) priorities of broadcasting contents to be transmitted based on the received information to adjust broadcasting content data; and
transmitting (850) data broadcasting contents based on the adjusted priorities.
16. The method of claim 15, wherein the adjusting (840) priorities of broadcasting contents comprises performing a statistical procedure on the received information to adjust broadcasting content data and adjusting previously set priorities of contents by raising the priorities of contents that users select and reducing the priorities of contents not selected.
17. A data broadcaster (200), comprising:
a content priority determination device (400) operable to process received content preference information regarding a preference for transmitted data broadcast content from a control device and to determine priorities of contents to be transmitted base on the content preference information; and
a broadcast web server (300) to transmit data broadcasting contents based on the determined priorities.
18. The data broadcaster of claim 17, wherein the content priority determination device (400) is disposed within the broadcast web server (300).
19. The data broadcaster of claim 17 or 18, wherein the content preference information is received by the content priority determination device (400) from the control device through a backchannel.
20. The data broadcaster of claim 19, wherein the backchannel is an internet.
21. A computer readable storage medium containing code to perform a method of transmitting data broadcasting contents, the method comprising:
receiving (820) content preference information indicating a preference for a transmitted data broadcasting content from a user terminal through a back channel;
determining (830) priorities of broadcasting contents to be transmitted based on the content preference information; and
transmitting (850) data broadcasting contents based on the determined priorities.
22. A computer readable storage medium containing code to perform a method of receiving data broadcasting contents, the method comprising:
transmitting (930) content preference information indicating a preference for a transmitted data broadcasting content to a data broadcasting content transmitting device through a back channel; and
receiving (910) the data broadcasting contents according to priorities of broadcasting contents which are determined based on the content preference information.
